(19) Europäisches Patentamt
European Patent Office
Office européen des brevets

(11) **EP 0 954 810 B1**

(12) **EUROPÄISCHE PATENTSCHRIFT**

(45) Veröffentlichungstag und Bekanntmachung des Hinweises auf die Patenterteilung:
**12.06.2002 Patentblatt 2002/24**

(21) Anmeldenummer: **98905222.0**

(22) Anmeldetag: **08.01.1998**

(51) Int Cl.⁷: **G06F 17/50**, G05B 13/04

(86) Internationale Anmeldenummer:
**PCT/DE98/00047**

(87) Internationale Veröffentlichungsnummer:
**WO 98/32084 (23.07.1998 Gazette 1998/29)**

(54) **VERFAHREN ZUR INITIALISIERUNG EINER SIMULATION DES VERHALTENS EINER TECHNISCHEN ANLAGE UND SIMULATIONSSYSTEM FÜR EINE TECHNISCHE ANLAGE**

METHOD FOR INITIALIZING A SIMULATED BEHAVIOR OF A TECHNICAL INSTALLATION AND SIMULATION SYSTEM FOR A TECHNICAL INSTALLATION

PROCEDE POUR INITIALISER UNE SIMULATION DU COMPORTEMENT D'UNE INSTALLATION INDUSTRIELLE ET SYSTEME DE SIMULATION POUR UNE INSTALLATION INDUSTRIELLE

(84) Benannte Vertragsstaaten:
**CH DE ES FR GB LI SE**

(30) Priorität: **21.01.1997 DE 19701928**

(43) Veröffentlichungstag der Anmeldung:
**10.11.1999 Patentblatt 1999/45**

(73) Patentinhaber: **SIEMENS AKTIENGESELLSCHAFT 80333 München (DE)**

(72) Erfinder: **FEHN, Thomas D-91058 Erlangen (DE)**

(56) Entgegenhaltungen:
**US-A- 5 490 095**

• **PATENT ABSTRACTS OF JAPAN vol. 102, no. 12 & JP 09 330308 A (HITACHI), 22.Dezember 1997,**

**Beschreibung**

Verfahren zur Initialisierung einer Simulation des Verhaltens einer technischen Anlage und Simulationssystem für eine technische Anlage .

Die Erfindung bezieht sich auf ein Verfahren zur Initialisierung einer Simulation des Verhaltens einer eine Anzahl von Komponenten umfassenden technischen Anlage. Sie betrifft weiter ein Simulationssystem zur Durchführung dieses Verfahrens.

Als Stand der Technik wird die Druckschrift US 5 490 095 A genannt.

Bei der Planung einer komplexen technischen Anlage, beispielsweise einer Kraftwerksanlage, ist eine möglichst genaue Kenntnis des Anlagenverhaltens in verschiedenen Betriebszuständen und auch bei Unfall- oder Störfallsituationen erforderlich. Für eine dazu notwendige Analyse des Anlagenverhaltens kann ein Simulationsverfahren unter Vorgabe wählbarer Situationen Szenarien aufzeigen. Die Simulation kann dabei die gesamte Anlage oder auch lediglich ein seinerseits eine Anzahl von Komponenten umfassendes Teilsystem der Anlage beschreiben. Eine komplexe technische Anlage, die üblicherweise eine große Anzahl von Komponenten umfaßt, oder auch ein Teilsystem davon wird dabei anhand des Verhaltens ihrer Komponenten simuliert.

Bei der Simulation einer technischen Anlage mit einer Anzahl von Komponenten wird üblicherweise eine Wechselwirkung zwischen den Komponenten zugrundegelegt, die einen Austausch von Prozeßparametern zwischen den Komponenten in geeigneter Weise beschreibt. Dabei kann beispielsweise für eine Kraftwerksanlage vorgesehen sein, daß die Wechselwirkung zwischen einer Komponente "Gebläse" und einer Komponente "Kamin" über einen vom Gebläse zum Kamin geführten Gasstrom beschrieben wird. Geeignete Parameter zur Beschreibung dieses Gasstroms können dabei beispielsweise seine Temperatur, sein Massenstrom und ein Druckverlust sein.

Die Initialisierung der Simulation einer komplexen technischen Anlage wird üblicherweise durchgeführt, indem jede Komponente der Anlage initialisiert wird. Dazu werden für die Parameter aller Komponenten jeweils Startwerte eingegeben. Dabei kann die Eingabe einer besonders großen Anzahl von Startwerten für verschiedenartige Parameter erforderlich sein. Dabei ist es üblich, daß für jede Komponente der zu simulierenden technischen Anlage Startwerte für alle die Wechselwirkung dieser Komponente mit anderen Komponenten definierenden Parameter eingegeben werden. Bei einer technischen Anlage mit einem einem Gebläse nachgeschalteten Kamin könnte dabei beispielsweise vorgesehen sein, daß bei der Initialisierung der Simulation Startwerte für die Temperatur, den Massenstrom und den Druck des das Gebläse verlassenden Gasstromes und Startwerte für die Temperatur, den Massenstrom und den Druck des am Kamin eintreffenden Gasstrom einzugeben sind. Zur Initialisierung können beispielsweise numerische Verfahren eingesetzt werden, bei denen jedoch Konvergenzprobleme auftreten können.

Bei einer derartigen Initialisierung der Simulation für die technische Anlage ist bei fehlerhafter Parametereingabe eine Inkonsistenz von Daten möglich. Dies könnte zu falschen Simulationsergebnissen oder zum Versagen des Simulationsverfahrens führen. Zudem ist eine derartige Initialisierung insbesondere bei einer komplexen technischen Anlage, wie beispielsweise einer Kraftwerksanlage, mit einer großen Anzahl von Komponenten besonders aufwendig.

Der Erfindung liegt die Aufgabe zugrunde, ein Verfahren zur Initialisierung einer Simulation des Verhaltens einer eine Anzahl von Komponente umfassenden technischen Anlage anzugeben, bei dem mit besonders geringem Aufwand eine besonders zuverlässige Parametereingabe ermöglicht ist. Weiterhin soll ein für die Durchführung dieses Verfahrens besonders geeignetes Simulationssystem für eine technische Anlage angegeben werden.

Bezüglich des Initialisierungsverfahrens wird diese Aufgabe erfindungsgemäß gelöst, indem für jede Komponente jeweils ein Komponententyp identifiziert wird, der schaltungstechnisch durch eine Anzahl von Eingängen und durch eine Anzahl von Ausgängen für jeweils einen Parameter charakterisiert ist, und indem für eine Komponente anhand einer hinterlegten komponententypspezifischen Signalstromstruktur für den Parameter jedes Ausgangs festgelegt wird, ob eine Parametereingabe angefordert wird.

Die Erfindung geht dabei von der Überlegung aus, daß für eine besonders zuverlässige und in sich konsistente Parametereingabe redundante Eingabevorgänge für Parameter weitestgehend vermieden sein sollten. Dazu sollte jeder Parameter lediglich bei der Initialisierung einer einzigen Komponente einzugeben sein und sodann bei anderen Komponenten, bei deren Initialisierung er benötigt wird, automatisch bereitgestellt werden. Um eine redundante Eingabe oder Mehrfacheingabe eines Parameters zu vermeiden, sollte dabei für jeden für eine Komponente relevanten Parameter überprüft werden, ob eine Parametereingabe erforderlich ist, oder ob dieser Parameter aus anderen, der Komponente zuzuführenden Parametern ableitbar ist. Eine derartige Überprüfung ist dann mit besonders einfachen Mitteln durchführbar, wenn die zu bearbeitenden Komponenten hinsichtlich ihrer schaltungstechnischen Eigenschaften anhand von Komponententypen klassifiziert sind. Für einen besonders geringen rechentechnischen Aufwand kann dabei die Festlegung, ob eine Parametereingabe erforderlich ist, anhand einer komponententypspezifischen Signalstromstruktur erfolgen.

Unter komponententypspezifischer Signalstromstruktur ist hierbei ein Datensatz in der Art eines Datenblattes zu verstehen, der für den jeweiligen Komponententyp-angibt, welche Eingänge und welche Ausgänge für welche Parameter dieser Komponententyp aufweist. Der Datensatz gibt weiterhin für den Parameter jedes Ausgangs an, von welchen weiteren Parametern er abhängt. Dabei ist insbesondere feststellbar, ob der Parameter eines Ausgangs vollständig durch die Parameter der Eingänge dieser Komponente bestimmt ist. Ist dies der Fall, so ist für den Parameter dieses Ausgangs keine Parametereingabe erforderlich. Dabei ist für eine vollständige Initialisierung lediglich die Kenntnis der Parameter an den Eingängen dieser Komponente erforderlich, die aus den dem jeweiligen Eingang ihrerseits vorgeschalteten weiteren Komponenten jeweils ermittelbar sind. Unter Parameter können hierbei beispielsweise eine einen Massenstrom beschreibende physikalische Meßgröße oder auch zu übertragende Signale oder Meldungen allgemeiner Art verstanden werden.

Die Signalstromstruktur für jeden Komponententyp ist zweckmäßigerweise in Form einer Abhängigkeitsmatrix hinterlegt. Eine derartige Abhängigkeitsmatrix kann beispielsweise in ihren Spalten die Eingänge und in ihren Zeilen die Ausgänge des jeweiligen Komponententyps repräsentieren. In dem Fall, daß der Parameter eines Ausgangs nur in Kenntnis eines Parameters eines Eingangs definierbar ist, kann an der entsprechenden Stelle der Abhängigkeitsmatrix der Wert "1" eingetragen sein. In dem Fall, daß der Parameter eines Ausgangs ohne Kenntnis des Parameters eines Eingangs definierbar ist, ist statt dessen an der entsprechenden Stelle der Abhängigkeitsmatrix der Wert "0" vorgesehen. Bei der Konzeption einer derartigen Abhängigkeitsmatrix können neben physikalischen Abhängigkeiten von Parametern auch anlagentechnisches Fachwissen sowie Standards und Konventionen berücksichtigt sein.

Vorteilhafterweise wird ein bei der Initialisierung der Komponente für einen Ausgang ermittelter oder eingegebener Parameterwert für die Initialisierung einer dem zugehörigen Ausgang eingangsseitig nachgeschalteten weiteren Komponente verwendet.

Bezüglich des Simulationssystems für eine eine Anzahl von Komponenten umfassende technische Anlage, deren Komponenten in einer Anzahl von Komponententypen klassifiziert sind, wird die genannte Aufgabe erfindungsgemäß gelöst durch einen Speicherbaustein, in dem für jeden Komponententyp eine komponententypspezifische Signalstromstruktur hinterlegt ist, und durch einen Rechnerbaustein, in dem für eine Komponente anhand der komponententypspezifischen Signalstromstruktur eine anzufordernde Parametereingabe festlegbar ist.

Zweckmäßigerweise ist dabei die Signalstromstruktur im Speicherbaustein in Form einer Abhängigkeitsmatrix hinterlegt.

Die Abhängigkeitsmatrix kann auch zweistufig aufgebaut sein. Dabei ist in einer ersten Stufe in Form einer Matrix festgehalten, welche physikalischen Ein- und Ausgänge die Komponente aufweist und wie diese miteinander in Verbindung stehen. Unter physikalischem Ein- bzw. Ausgang ist hierbei eine anhand eines Medienstroms charakterisierte Einheit zu verstehen, die durch eine Mehrzahl von Prozeßparametern bestimmt ist. Beispielsweise weist eine Komponente "Gebläse" als physikalischen Ausgang einen Ausgang für einen Gasstrom auf, der durch die Prozeßparameter Massenstrom, Temperatur und Enthalpie definiert ist. Diese Prozeßparameter können zu einem für den physikalischen Ausgang charakteristischen Parametersatz zusammengefaßt sein. In der ersten Stufe der zugehörigen Abhängigkeitsmatrix ist dabei festgehalten, mit welchen physikalischen Eingängen dieser physikalische Ausgang in Verbindung steht.

Bei dem zweistufigen Aufbau der Abhängigkeitsmatrix ist in der zweiten Stufe für jeden physikalischen Ein- und Ausgang eine Information über die zugehörigen Prozeßparameter hinterlegt. In ihrer Summe weisen beide Stufen der zweistufig aufgebauten Abhängigkeitsmatrix somit den gleichen Informationsgehalt auf wie eine einstufige Abhängigkeitsmatrix, die sich unmittelbar auf die Prozeßparameter bezieht.

Die mit der Erfindung erzielten Vorteile bestehen insbesondere darin, daß durch die Anforderung einer Parametereingabe erst nach der Prüfung der komponententypspezifischen Signalstromstruktur eine redundante oder mehrfache Parametereingabe vermieden ist. Eine Inkonsistenz von Parametereingaben ist somit besonders sicher vermieden, so daß das Initialisierungsverfahrens besonders zuverlässig ist. Zudem ist der Aufwand bei der Parametereingabe besonders gering. Das Initialisierungsverfahren ist rekursiv analytisch und nichtnumerisch, so daß keinerlei Konvergenzprobleme auftreten.

Das Initialisierungsverfahren ermöglicht in der Art einer signalorientierten Sortierung eine logisch gerichtete Parametereingabe. Für den Fall, daß für den Parameter eines Ausgangs einer Komponente erkannt wird, daß dieser durch Parameter an den Eingängen dieser Komponente vollständig bestimmt ist, können nämlich die Parameter an diesen Eingängen sofort ermittelt und initialisiert werden. Dazu kann in der Art einer Signalrückverfolgung für jeden derart zu beschreibenden Eingang der Komponente der an diesen angeschlossene Ausgang der vorangeschalteten Komponente ermitelt werden. Der dort vorliegende Parameter kann dabei unmittelbar entweder durch eine Parametereingabe oder - im Falle seiner vollständigen Bestimmung durch Parameter an den Eingängen dieser Komponente - durch weitere Signalrückverfolgung bedarfsgerecht initialisiert werden. Somit ist sichergestellt, daß zur Initialisierung eines Parameters am Ausgang der Komponente alle benötigten Informationen zur Verfügung stehen.

Eine derartige Initialisierung ist für eine Simulation einer technischen Anlage oder auch für eine Simulation lediglich eines Teilsystems einer technischen Anlage gleichermaßen einsetzbar.

Ein Ausführungsbeispiel der Erfindung wird anhand einer Zeichnung näher erläutert. Darin zeigen:

Figur 1   ein Simulationssystem für eine technische Anlage,

Figur 2   schematisch eine Komponente der technischen Anlage, und

Figur 3   schematisch ein Schaltbild eines eine Anzahl von Komponenten umfassenden Teilsystems der technischen Anlage.

Gleiche Teile sind in allen Figuren mit den gleichen Bezugszeichen versehen.

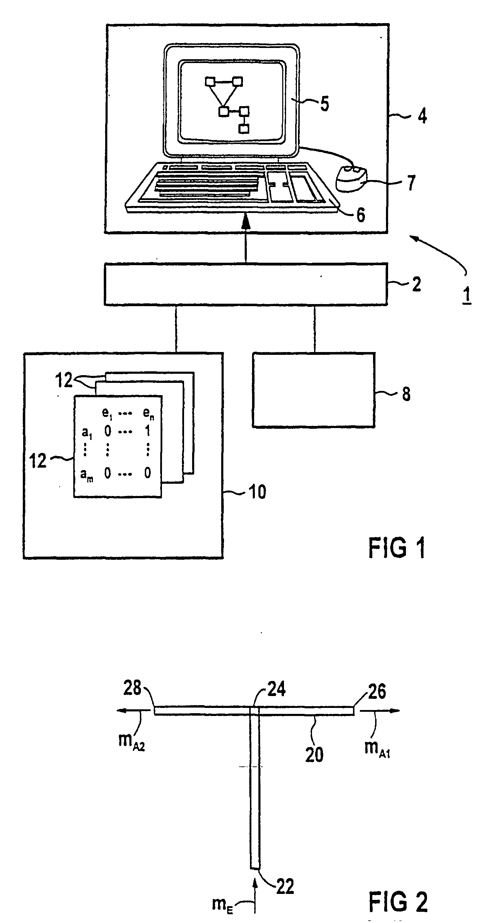

Das Simulationssystem 1 gemäß Figur 1 umfaßt einen Rechnerbaustein 2, an den eine Ein-/Ausgabeeinheit 4 angeschlossen ist. Als Ein-/Ausgabeeinheit 4 ist im Ausführungsbeispiel ein Terminal mit einem Bildschirm 5 als Ausgabemedium und einer Tastatur 6 sowie einer Maus 7 als Eingabemedien vorgesehen. Der Rechnerbaustein 2 ist weiterhin an einen ersten Speicherbaustein 8 sowie an einen zweiten Speicherbauscein 10 angeschlossen.

Das Simulationssystem 1 dient zur Simulation des Verhaltens einer eine Anzahl von Komponenten umfassenden, nicht näher dargestellten technischen Anlage. Als technische Anlage ist dabei im Ausführungsbeispiel ein Teilsystem einer Kraftwerksanlage vorgesehen. Es kann sich dabei auch um eine beliebige andere technische Anlage handeln. Die Komponenten der technischen Anlage sind in Komponententypen unterteilt. Die Komponenten eines Komponententyps weisen dabei vergleichbare schaltungstechnische Eigenschaften auf. Beispielsweise umfaßt eine Kraftwerksanlage üblicherweise eine große Anzahl von Wärmetauschern als Komponenten. Bei der Simulation wird jeder Wärmetauscher als dem Komponententyp "Wärmetauscher" zugehörig erkannt und dementsprechend schaltungstechnisch eingebunden.

Schaltungstechnisch ist jeder Komponententyp durch eine Anzahl von Eingängen und durch eine Anzahl von Ausgängen für jeweils einen Parameter charakterisiert. Beispielsweise wird ein Wärmetauscher üblicherweise von einem Primärmedium durchströmt, dessen Wärme auf ein den Wärmetauscher ebenfalls durchströmendes Sekundärmedium übertragen wird. Schaltungstechnisch weist ein Wärmetauscher somit Eingänge für die die einströmenden Medienflüsse charakterisierenden Parameter auf. Diese Parameter können beispielsweise sein:
Temperatur, Druck und Massenstrom des Primärmediums sowie Temperatur, Druck und Massenstrom des Sekundärmediums. Analog weist der Wärmetauscher schaltungstechnisch Ausgänge für folgende Parameter auf: Temperatur, Druck und Massenstrom des ausströmenden Primärmediums sowie Temperatur, Druck und Massenstrom des ausströmenden Sekundärmediums.

Der Komponententyp "Wärmetauscher" ist somit gemäß dem genannten Beispiel durch sechs Eingänge und durch sechs Ausgänge schaltungstechnisch vollständig charakterisiert.

Für jeden Komponententyp ist im Speicherbaustein 10 in Form einer Abhängigkeitsmatrix 12 eine komponententypspezifische Signalstromstruktur hinterlegt. Jede Abhängigkeitsmatrix 12 repräsentiert in ihren Spalten die Eingänge und in ihren Zeilen die Ausgänge des zugrundeliegenden Komponententyps. In der jeweiligen Abhängigkeitsmatrix 12 ist für jeden Ausgang des jeweiligen Komponententyps festgehalten, ob dessen Parameter durch die Parameter an den Eingängen des jeweiligen Komponententyps vollständig definiert ist. Dies ist in der jeweiligen Abhängigkeitsmatrix 12 durch den Wert "1" gekennzeichnet.

Bei Vernachlässigung einer Leckrate ist es beispielsweise für einen Wärmetauscher erforderlich, daß der Massenstrom des Primärmediums am Ausgang des Wärmetauschers gleich dem Massenstrom des Primärmediums am Eingang des Wärmetauschers ist. In diesem Fall ist also der Parameter am Ausgang "Massenstrom des Primärmediums" des Komponententyps "Wärmetauscher" durch den Parameter am Eingang "Massenstrom des Primärmediums" des Komponententyps "Wärmetauscher" vollständig definiert. Die Abhängigkeitsmatrix 12 des Komponententyps "Wärmetauscher" weist also an der entsprechenden Stelle den Wert "1" auf.

Zur näheren Erläuterung der Struktur der Abhängigkeitsmatrizen 12 ist in Figur 2 schematisch als Komponente ein Leitungs-T-Stück 20 gezeigt. Das Leitungs-T-Stück 20 weist einen Eingang 22, einen Verzweigungspunkt 24 und Ausgänge 26, 28 auf. Dem Eingang 22 des Leitungs-T-Stücks 20 ist ein Medium, beispielsweise ein Fluid, zuführbar. Der Medienstrom ist dabei durch einen Massenstrom $m_E$ am Eingang 22 des Leitungs-T-Stücks 20 charakterisiert. Der Massenstrom $m_E$ wird im Verzweigungspunkt 24 aufgespalten in einen ersten Massenteilstrom $m_{A1}$ und in einen zweiten Massenteilstrom $mm_{A2}$. Der erste Massenteilstrom $m_{A1}$ verläßt das Leitungs-T-Stück über den Ausgang 26, wogegen der zweite Massenteilstrom $m_{A2}$ das Leitungs-T-Stück 20 über dessen Ausgang 28 verläßt. Die Aufteilung des einströmenden Massenstroms $m_E$ in die Teilströme $m_{A1}$, $m_{A2}$ wird dabei durch ein leitungsspezifisches Verzweigungsverhältnis festgelegt.

Das Leitungs-T-Stück 20 ist als zum Komponententyp "T-Stück" gehörig identifizierbar. Für diesen Komponententyp gilt die Randbedingung, daß die Summe der ausströmenden Teilströme $m_{A1}$, $m_{A2}$ gleich dem einströmenden Massenstrom $m_E$ sein muß. Um das schaltungstechnische Verhalten einer Komponente vom Komponententyp "T-Stück" vollständig zu beschreiben, ist somit lediglich die Angabe des einströmenden Massenstroms $m_E$ und eines der beiden ausströmenden Teilströme $m_{A1}$ oder $m_{A2}$ erforderlich. Der jeweils andere ausströmende Teilstrom $m_{A2}$ bzw. $m_{A1}$ ist dann bereits vollständig definiert. Alternativ wäre auch die Angabe der beiden ausströmenden Teilströme $m_{A1}$ und $m_{A2}$ ausreichend. In diesem Fall ist aus Konsistenzgründen der einströmende Massenstrom $m_E$ vollständig bestimmt.

Diese schaltungstechnischen Eigenschaften des Komponententyps "T-Stück" schlagen sich in der zugehörigen Abhängigkeitsmatrix 12 nieder. Da der Komponententyp "T-Stück" einen Parametereingang, nämlich für den einströmenden Massenstrom $m_E$, und zwei Parameterausgänge, nämlich für die ausströmenden Teilströme $m_{A1}$ und $m_{A2}$, aufweist, umfaßt die dem Komponententyp "T-Stück" zugeordnete Abhängigkeitsmatrix eine Spalte und zwei Zeilen.

Als schaltungstechnische Information ist in der zugehörigen Abhängigkeitsmatrix 12 hinterlegt, daß der Parameter eines der beiden Ausgänge durch Angabe des Parameters des anderen Ausgangs und des Parameters des Eingangs vollständig bestimmt ist. Als Konvention kann dabei einfließen, daß der Parameter des ersten Ausgangs einzugeben ist, wogegen der Parameter des zweiten Ausgangs aus den eingegebenen und am Eingang zur Verfügung stehenden Daten ermittelt wird. Dementsprechend hat die zugehörige Abhängigkeitsmatrix 12 die Struktur

$$\begin{pmatrix} 0 \\ 1 \end{pmatrix}.$$

Die "1" in der unteren Zeile der Abhängigkeitsmatrix 12 sagt, daß der Parameter des durch diese Zeile repräsentierten Ausgangs durch Parameter anderer Ein- und/oder Ausgänge dieses Komponententyps vollständig definiert ist. Eine Eingabe dieses Parameters ist daher nicht erforderlich. Zu seiner Berechnung wird der Parameter des Eingangs benötigt. Die "0" in der oberen Zeile der Abhängigkeitsmatrix 12 besagt hingegen, daß zur Berechnung des Parameters des zugeordneten Ausgangs der Parameter des Eingangs nicht benötigt wird. Vielmehr ist eine Eingabe dieses Parameters erforderlich.

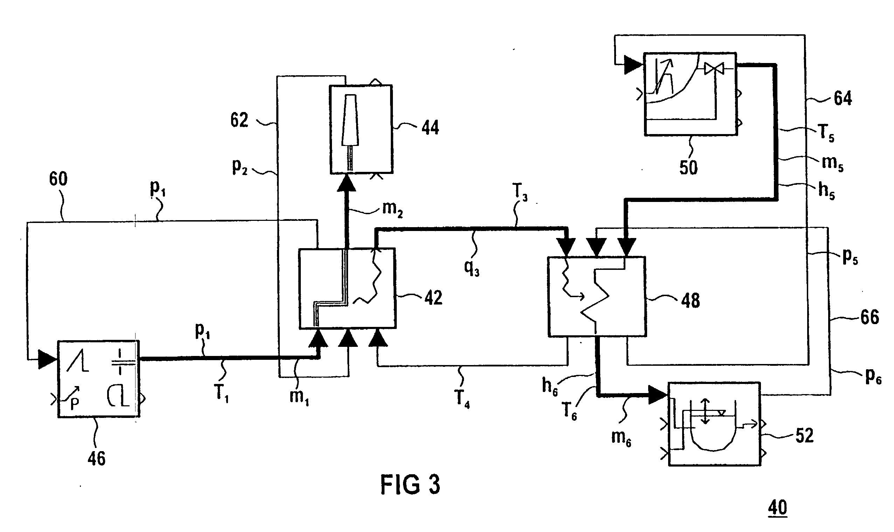

In Figur 3 ist ein Teilsystem 40 einer Kraftwerksanlage schaltungstechnisch schematisiert dargestellt. Das Teilsystem 40 umfaßt als Komponenten einen Rauchgaskanal 42, dem ein Kamin 44 nachgeschaltet ist. Weiterhin sind als Komponenten des Teilsystems 40 eine dem Rauchgaskanal 42 vorgeschaltete Lufteinlaßdrossel 46 und eine im Rauchgaskanal 42 angeordnete Vorwärmheizfläche 48 vorgesehen. Als weitere Komponenten des Teilsystems 40 ist der Vorwärmheizfläche 48 eine Fluidquelle vor- und ein Fluidreservoir 52 nachgeschaltet. Die genannten Komponenten stehen schaltungstechnisch folgendermaßen in Wechselwirkung:

Von der Lufteinlaßdrossel 46 ausgehend strömt dem Rauchgaskanal 42 ein Rauchgasstrom zu. Dieser ist charakterisiert durch eine Temperatur $T_1$ und einen Massenstrom $m_1$ sowie einen Druck $p_1$. Der Druck $p_1$ ist seinerseits bestimmt durch Eigenschaften des Rauchgaskanals 42, was durch den Pfeil 60 angedeutet ist.

Ausgehend vom Rauchgaskanal 42 strömt dem Kamin 44 ein Abgasstrom zu. Dieser ist definiert durch einen Massenstrom m2. Als weitere Größe wirkt ausgehend vom Kamin 44 ein Druck $p_2$ auf den Rauchgaskanal 42 ein, was durch den Pfeil 62 angedeutet ist.

Im Rauchgaskanal 42 wird Wärme von Rauchgas auf ein in der Vorwärmheizfläche 48 strömenden Medium übertragen. Dieser Wärmeübertrag ist charakterisiert durch eine Wärmemenge $q_3$ und eine Temperatur $T_3$. Weiterhin beeinflußt eine vom der Vorwärmheizfläche 48 ausgehende Temperatur $T_4$ ihrerseits das Verhalten der Medien im Rauchgaskanal 42.

Die Wärmemenge $q_3$ wird auf ein der Vorwärmheizfläche 48 zugeführtes Medium übertragen. Dieses wird von der Fluidquelle 50 in die Vorwärmheizfläche 48 gefördert, wobei der Medienstrom charakterisiert ist durch seine Temperatur $T_5$, seinen Massenstrom $m_5$ und eine Enthalpie $h_5$. Das Verhalten der Fluidquelle 50 ihrerseits wird von einem Druck $p_5$ zwischen der Vorwärmheizfläche 48 und der Fluidquelle 50 beeinflußt, was durch den Pfeil 64 angedeutet ist.

Ausgehend von der Vorwärmheizfläche 48 strömt dem Fluidreservoir 52 vorgewärmtes Fluid zu. Der zugehörige Medienstrom ist charakterisiert durch eine Temperatur $T_6$, einen Massenstrom $m_6$ und eine Enthalpie $h_6$. Die Eigenschaften der Vorwärmheizfläche 48 ihrerseits wird wiederum beeinflußt durch einen Druck $p_6$ zwischen der Vorwärmheizfläche 48 und dem Fluidreservoir 52, was durch den Pfeil 66 angedeutet ist.

Bei der Initialisierung einer Simulation des Teilsystems 40 ist somit eine große Anzahl von Parameter einzugeben. Um den dafür erforderlichen Aufwand besonders gering zu halten und Inkonsistenzen zu vermeiden, wird im Simulationssystem 1 zunächst für jede Komponente jeweils ein Komponententyp identifiziert. Anhand einer im Speicherbaustein 10 hinterlegten, komponententypspezifischen Signalstromstruktur wird für den Parameter jedes Ausgangs einer Komponente festgelegt, ob eine Parametereingabe angefordert wird. Dazu wird die jeweilige im Speicherbaustein 10 hinterlegte Abhängigkeitsmatrix 12 herangezogen.

Beispielsweise wird bei der Initialisierung der Vorwärmheizfläche 48 zunächst deren Komponententyp identifiziert. Der Komponententyp wird dabei durch Vergleich mit einer Anzahl im Speicherbaustein 8 hinterlegten Modelltypen ermittelt. Für die Vorwärmheizfläche 48 wird dabei festgestellt, daß es sich um eine Komponente vom Komponententyp "Heizfläche" handelt. Eine Komponente vom Komponententyp "Heizfläche" ist von einem Medium durchströmbar und weist somit einen Eingang und einen Ausgang für dieses Medium auf. Die Beschreibung des zugehörigen Medienstroms kann, wie in Figur 3 gezeigt, anhand der Parameter Temperatur, Massenstrom und Enthalpie erfolgen. Dementsprechend sind für diesen Komponententyp Eingänge bzw. Ausgänge für diese Parameter vorgesehen.

Die Wirkungsweise einer Komponente vom Komponententyp "Heizfläche" ist weiterhin durch ihre Wechselwirkung mit dem Rauchgaskanal 42 bestimmt. Diese Wechselwirkung ist mittels des Wärmestroms $q_3$ und der Temperatur $T_3$ beschreibbar. Dementsprechend weist der Komponententyp "Heizfläche" jeweils einen Eingang für die Parameter Wärmestrom und Temperatur auf. Weiterhin sind ein Eingang für den Druck $p_6$ sowie ein Ausgang für die Temperatur $T_4$ und ein weiterer Ausgang für den Druck $p_5$ vorgesehen.

Für den Parameter jedes Ausganges wird festgelegt, ob eine Parametereingabe bei der Initialisierung der Vorwärmheizfläche 48 angefordert wird oder nicht. Bei dieser Festlegung wird als komponententypspezifische Signalstromstruktur die für den Komponententyp "Vorwärmheizfläche" hinterlegte Abhängigkeitsmatrix 12 zugrundegelegt. In der entsprechenden Abhängigkeitsmatrix 12 ist in kodierter Form für jeden Ausgang hinterlegt, ob der zugehörige Parameter durch die Parameter an den Eingängen vollständig bestimmt ist. Wenn dies der Fall ist, so wird keine Parametereingabe für den Parameter am jeweiligen Ausgang angefordert.

Beispielsweise wird für den Massenstrom $m_6$ dabei erkannt, daß dieser bei Vernachlässigung einer Leckrate gleich dem der Vorwärmheizfläche 48 zugeführten Massenstrom $m_5$ sein muß. Ohne Berücksichtigung weiterer Größen ist der Massenstrom $m_6$ somit durch den am Eingang vorliegenden Massenstrom $m_5$ vollständig bestimmt. Eine Parametereingabe des Massenstroms $m_6$ ist damit bei der Initialisierung der Vorwärmheizfläche 48 nicht erforderlich und wird dementsprechend nicht angefordert.

Die Enthalpie $h_6$ und die Temperatur $T_6$ des die Vorwärmheizfläche 48 verlassenden Fluids sind jeweils eindeutige Funktionen von Temperatur $T_5$, Massenstrom $m_5$ und Enthalpie $h_5$ des der Vorwärmheizfläche 48 zugeführten Mediums sowie der Wärmemenge $q_3$ und der Temperatur $T_3$. Somit ist für die Parameter $h_6$ und $T_6$ eine Parametereingabe bei der Initialisierung der Vorwärmheizfläche 48 ebenfalls nicht erforderlich und wird daher nicht angefordert. Analoges gilt für die Parameter $T_4$ und $T_5$.

Bei der Initialisierung der Vorwärmheizfläche 48 wird somit anhand der zugehörigen Abhängigkeitsmatrix 12 festgestellt, daß die Parameter aller Ausgänge durch die Parameter der Eingänge vollständig bestimmt sind. Auf eine Parametereingabe kann somit verzichtet werden. Auf diese Weise ist eine redundante Parametereingabe und eine darauf möglicherweise resultierende Inkonsistenz bei der Initialisierung sicher vermieden.

Um die Initialisierung der Vorwärmheizfläche 48 abschließen zu können, ist jedoch die Kenntnis der relevanten Parameter an den Eingängen erforderlich. Dazu wird festgestellt, welche weitere Komponente dem jeweiligen Eingang ausgangsseitig vorgeschaltet ist. Beispielsweise wird für die Temperatur $T_5$, den Massenstrom $m_5$ und die Enthalpie $h_5$ des der Vorwärmheizfläche 48 zugeführten Fluids als relevante vorgeschaltete Komponente die Fluidquelle 50 identifiziert.

Bevor die Initialisierung der Vorwärmheizfläche 48 fertiggestellt wird, wird daher zunächst die Initialisierung der dieser vorgeschalteten Fluidquelle 50 vorgenommen. Dabei wird sinngemäß auf die gleiche Weise verfahren, wie für die Vorwärmheizfläche 48 dargelegt. Insbesondere wird festgestellt, daß die Fluidquelle 50 durch Ausgänge für Temperatur $T_5$, Massenstrom $m_5$ und Enthalpie $h_5$ des der Vorwärmheizfläche 48 zuzuführenden Mediums charakterisiert ist.

Andererseits ist für die Fluidquelle 50 lediglich ein Eingang für den Druck $p_5$ vorgesehen. Anhand der für die Fluidquelle 50 hinterlegten Abhängigkeitsmatrix 12 wird festgestellt, daß die Temperatur $T_5$, der Massenstrom m; und die Enthalpie $h_5$ nicht durch die Parameter an den Eingängen der Fluidquelle 50, nämlich dem Druck $p_5$, vollständig definiert sind. Für eine Initialisierung ist daher eine Eingabe dieser Parameter erforderlich. Somit wird eine Parametereingabe für die Temperatur $T_5$, den Massenstrom $m_5$ und die Enthalpie $h_5$ bei der Initialisierung der Fluidquelle 50 angefordert. Die Initialisierung der Fluidquelle 50 kann dabei abgeschlossen werden, da durch die Parametereingabe die Parameter an allen Ausgängen der Fluidquelle 50 definiert sind. Diese Parameter werden nach ihrer Eingabe oder Berechnung automatisch auch für die Initialisierung der der Fluidquelle nachgeschalteten Vorwärmheizfläche 48 zur Verfügung gestellt. Die Initialisierung der Vorwärmheizfläche 48 kann somit fortgesetzt werden.

In analoger Weise werden alle Komponenten des Teilsystems 40 initialisiert. Dabei wird in der Art einer verketteten Initialisierung dem schaltungstechnischen Aufbau der hintereinandergeschalteten Komponente gefolgt. Durch die selektive Anforderung einer Parametereingabe ist dabei bei besonders geringem Aufwand bei der Redundanz bei der Parametereingabe und eine daraus möglicherweise resultierende Inkonsistenz vermieden.

**Patentansprüche**

**1.** Verfahren zur Initialisierung einer Simulation des Verhaltens einer eine Anzahl von Komponenten umfassenden technischen Anlage, bei dem für jede Komponente jeweils ein Komponententyp identifiziert wird, der schaltungstechnisch durch eine Anzahl von Eingängen und durch eine Anzahl von Ausgängen für jeweils einen Parameter charakterisiert ist, und bei dem für eine Komponente anhand einer hinterlegten komponententypspezifischen Signalstromstruktur für den Parameter jedes Ausgangs festgelegt wird, ob eine Parametereingabe angefordert wird.

**2.** Verfahren nach Anspruch 1, bei dem die Signalstromstruktur in der Form einer Abhängigkeitsmatrix (12) hinterlegt ist.

**3.** Verfahren nach Anspruch 1 oder 2, bei dem ein bei der Initialisierung der Komponente für einen Ausgang ermittelter oder eingegebener Parameterwert für die Initialisierung einer dem zugehörigen Ausgang eingangsseitig nachgeschalteten weiteren Komponente verwendet wird.

**4.** Simulationssystem für eine eine Anzahl von Komponenten umfassende technische Anlage, deren Komponenten in eine Anzahl von Komponententypen klassifiziert sind, mit einem Speicherbaustein (10), in dem für jeden Komponententyp eine komponententypspezifische Signalstromstruktur hinterlegt ist, und mit einem Rechnerbaustein (2), in dem für eine Komponente anhand der komponententypspezifischen Signalstromstruktur eine anzufordernde Parametereingabe festlegbar ist.

**5.** Simulationssystem (1) nach Anspruch 4, in dessen Speicherbaustein (10) die Signalstromstruktur in Form einer Abhängigkeitsmatrix (12) hinterlegt ist.

**Claims**

**1.** Method of initializing a simulation of the behaviour of an industrial plant comprising a number of components, in which for each component a component type is identified in each case and, in circuit terms, is **characterized by** a number of inputs and by a number of outputs for one parameter in each case, and in which, using a stored component-type-specific signal flow structure for the parameter of each output, it is specified whether a parameter input is requested for a component.

**2.** Method according to Claim 1, in which the signal flow structure is stored in the form of a dependence matrix (12).

**3.** Method according to Claim 1 or 2, in which a parameter value which is ascertained during the initialization of the component for an output, or which is input, is used for the initialization of a further component whose input is connected downstream of the associated output.

**4.** Simulation system for an industrial plant comprising a number of components, whose components are classified into a number of component types, having a storage module (10), in which a component-type-specific signal flow structure is stored for each component type, and having a computer module (2) in which, using the component-type-specific signal flow structure, it is possible to specify a parameter input to be requested for a component.

**5.** Simulation system (1) according to Claim 4, in whose storage module (10) the signal flow structure is stored in the form of a dependence matrix (12).

**Revendications**

**1.** Procédé d'initialisation d'une simulation du comportement d'une installation industrielle comportant un certain nombre de composants, dans lequel pour chaque composant on identifie à chaque fois un type de composant qui est caractérisé du point de vue de la technique des circuits par un certain nombre d'entrée et par un certain nombre de sorties pour chacune desquelles est associé un paramètre, et dans lequel on détermine pour un composant, conformément à une structure de courant de signaux consignée, spécifique du type de composant, pour le paramètre de chaque sortie, s'il est requis d'entrer un paramètre.

**2.** Procédé selon la revendication 1, dans lequel la structure de courant de signaux est consignée sous la forme d'une matrice de dépendance (12).

**3.** Procédé selon la revendication 1 ou 2, dans lequel une valeur de paramètre entrée ou déterminée pour une sortie lors de l'initialisation du composant est utilisée pour initialiser un autre composant monté du côté de l'entrée en aval de la sortie associée.

**4.** Système de simulation pour une installation industrielle comportant un certain nombre de composants qui sont classés suivant un certain nombre de types de composant, avec un composant de mémorisation (10) dans lequel une structure de courant de signaux spécifique du type de composant est consignée pour chaque type de composant, et avec un composant de traitement informatique (2) dans lequel une entrée de paramètre à demander peut être déterminée pour un composant conformément à la structure de courant de signaux spécifique du type de composant.

**5.** Système de simulation (1) selon la revendication 1, dans le composant de mémorisation (10) duquel la structure de courant de signaux est consignée sous la forme d'une matrice de dépendance (12).

FIG 1

FIG 2

FIG 3